# EUROPEAN PATENT APPLICATION

(11) **EP 4 687 313 A1**
(43) Date of publication of application: **04.02.2026**
(21) Application number: 25193085.5
(22) Date of filing: 31.07.2025
(51) Int. Cl.: H04B 17/309, H04W 84/12, H04W 16/14, H04W 24/02, H04W 40/24, H04W 48/16

(54) **ASSESSING INTERFERENCE IN WIRELESS COMMUNICATION**

(30) Priority: 01.08.2024 US 202418792350
(71) Applicant: Fluke Corporation, Everett, WA 98203 (US)
(72) Inventor: KRAUS, Matthew T., Everett, WA 98203 (US)
(74) Representative: HGF

(57) **Abstract**

Systems, methods, and processor-readable storage media for access point identification and analysis are provided herein. The systems disclosed herein a launch channel interference interface that indicates channels of a plurality of channels along a first axis, access point signal strength along a second axis, and channel utilization along a third axis. The channel interference interface is populated based on sensed data associated with a plurality of channels and a plurality of access points. One or more access point indicators, one or more bandwidth indicators, and one or more channel utilization indicators are generated based on the sensed data. The channel interference interface enables an assessment of interference, e.g., as experienced by an access point on a primary channel in the plurality of channels, based on the one or more access point indicators, the one or more bandwidth indicators, or the one or more channel utilization indicators, or a combination thereof.

## Description

### BACKGROUND

### Technical Field

The present disclosure relates to the detection of interference in a wireless communication environment, and more particularly to improving networking performance or provisioning based on wireless frequency usage and interference detected as a result of scanning for access points that transmit data using different frequency channels.

### Description of the Related Art

Channel scanners that detect access points typically scan frequency channels to identify and display the frequency channel and bandwidth usage of identified access points. Conventional displays of the frequency channel and bandwidth usage utilize a graph and a plurality of arcs plotted on the graph that each indicate access points and their transmission bandwidth.

### BRIEF SUMMARY

The present disclosure is directed to channel scanning and access point identification in a wireless communication environment, and methods, devices, and systems to improve or optimize computer networking, e.g., by improving the ability of technicians or other users to configure, install, remove, or otherwise manage the provision or operation of wireless access points In addition, the present disclosure teaches methods, devices, and systems that report frequency channel and bandwidth utilization data in an improved technical manner that enables a user to quickly visually assess interference, e.g., as experienced by an access point, in a wireless environment.

A system that detects wireless channel utilization by access points and identifies whether communication frequencies used by the access points overlap is described herein. The system may be configured to launch a channel interference interface for assessing and analyzing interference that occurs on wireless communication channels. The channel interference interface may graphically indicate channels, access point utilization, and channel utilization. The system may populate the channel interference interface with access point indicators, bandwidth indicators, and channel utilization indicators. The technical relationship between the indicators may quantifiably or qualitatively indicate interference on a channel. Furthermore, the system may use the improved channel interference interface to enable a visual assessment of interference experienced by access points based on such technical indicators and their relationship(s) in a wireless environment.

The channel interference interface may be populated based on data received from one or more access points, such as via one or more data packets (e.g. beacon data packets) transmitted by the one or more access points. A beacon data packet may be indicative of a frequency bandwidth utilized by at least one access point for wireless communication, a signal strength of at least one access point, other data regarding at least one access point, or some combination thereof. The system may receive the data from a channel scanner that may be configured to tune to one or more frequency channels for a selected period of time to "sense" the data. The channel scanner may receive updated data that the system uses to update the channel interference interface.

The channel utilization indicators may be aligned with a respective channel indicated along a first axis of a graph included in the channel interference interface. The channel utilization indicators may be positioned with respect to a third axis of the graph to indicate a channel utilization of the respective channel. The access point indicators may represent an access point, such as an access point indicated by data sensed by the system. An access point indicator may be aligned with the first axis of the graph included in the channel interference interface to indicate a primary channel of the access point. The access point indicator may be positioned with respect to a second axis of the graph that indicates a signal strength of the access point. The bandwidth indicators may represent a frequency bandwidth of an access point. A bandwidth indicator may be positioned relative to an access point indicator associated with the access point for which the bandwidth indicator represents a frequency bandwidth. In some embodiments, the channel interference interface may be limited to a subset of channels of the plurality of channels. In such embodiments, the channel interference interface may include a portion of a bandwidth indicator that represents a bandwidth that includes frequency channels outside of the subset of channels.

The channel interference interface may include a merged access point indicator generated based on two or more access point indicators. The channel interference interface may include a merged bandwidth indicator generated based on two or more bandwidth indicators. In some embodiments, the merged access point indicator is generated when a signal strength of two or more access points is within a threshold range of signal strengths of each other. In some embodiments, generating the merged access point indicator includes generating a merged bandwidth indicator based on one or more frequency bandwidths associated with access points used to generate the merged access point indicator. The system may launch a second channel interference interface in response to receiving input selecting an access point indicator, merged access point indicator, bandwidth indicator, merged bandwidth indicator, or some combination thereof. The second channel interference interface may include access point indicators and bandwidth indicators that were used to generate merged access point indicators, bandwidth indicators, or some combination thereof.

### BRIEF DESCRIPTION OF THE SEVERAL VIEWS OF THE DRAWINGS

Figure 1 is a display diagram of a conventional access point display used in prior art systems.
Figure 2 is a display diagram of a sample environment in which a wireless channel overlap and detection system may operate, according to one or more embodiments of the present disclosure.
Figure 3 is a block diagram of a sample wireless channel overlap and detection system, according to one or more embodiments of the present disclosure.
Figure 4 is a display diagram of a sample channel interference interface, according to one or more embodiments of the present disclosure.
Figure 5 is a display diagram of a sample second channel interference interface, according to one or more embodiments of the present disclosure.
Figure 6 is a flow diagram of a sample process that enables a visual assessment of interference via a channel interference interface, according to one or more embodiments of the present disclosure.
Figure 7 is a flow diagram of a sample process to generate a merged access point indicator, according to one or more embodiments of the present disclosure.
Figure 8 is a flow diagram of a sample process to launch a second channel interference interface, according to one or more embodiments of the present disclosure.
Figure 9 is a flow diagram of a sample process to scan wireless communication channels, according to one or more embodiments of the present disclosure.
Figure 10 is a display diagram of another sample channel interference interface, according to one or more embodiments of the present disclosure.

### DETAILED DESCRIPTION

Data representing wireless channel utilization, access point bandwidth, and access point signal strength, is collected for a plurality of wireless (e.g., Wi-Fi) channels. The data is used to determine whether the communication frequencies used by access points overlap with channel frequencies used by other access points. The data and resulting determinations are displayed to a user in a wireless channel interference interface that is generated and shown on a display. The wireless channel interference interface enables the user to quickly visually assess the interference experienced by various access points in a wireless communication environment.

An access point in a wireless network may experience interference with its wireless communications due to the channel on which the access point communicates data. The interference may be caused by other access points that transmit data using frequencies that overlap with the channel on which the access point communicates. Furthermore, technicians that configure, install, remove, or otherwise manage the operation of an access point may seek to determine the number of access points in an area that communicate data via wireless channels, a signal strength of each access point in the area, and which access points transmit data in a range of frequencies that overlap with channel frequencies used by other access points that communicate data in the area.

Current methods to detect and display channel utilization are not known to detect and report the overlap of frequencies used by access points in a way that a user is able to quickly understand and assess wireless channel interference.

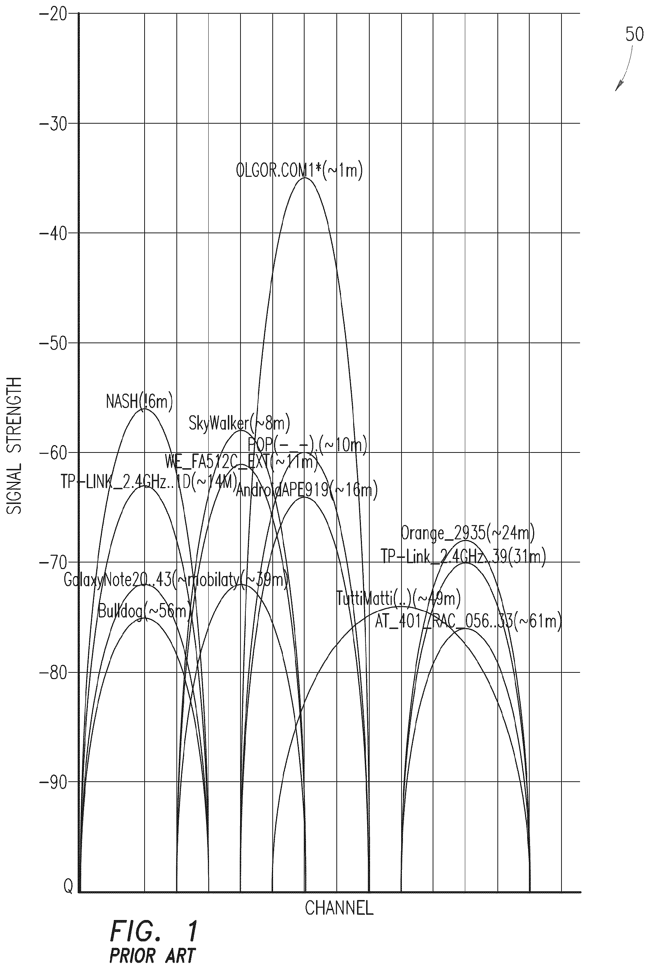

Figure 1 is a display diagram of a conventional access point display 50 used in prior art systems. As seen in Figure 1, the conventional access point display 50 depicts multiple parabolas, each parabola having a peak that represents the signal strength of a respective access point and a width that nominally represents the bandwidth used by the access point. However, the conventional access point display 50 overlays the parabolas on one another, making it difficult for a technician to identify which access points utilize which channels and evaluate overlapping bandwidth of each access point. Additionally, the peak of the parabola for each access point depicted by the conventional access point display 50 simply occurs at the midpoint of the parabola. In cases where an access point has been configured to utilize a non-standard bandwidth, the parabola does not accurately depict the primary channel used by the access point to which the parabola corresponds. For example, for a 5 GHz wireless frequency band, the default (standard) bandwidth is 20 MHz. Parabolas used in prior art to indicate bandwidth, such as in the conventional access point display 50, show a center frequency which only lines up with the primary channel of the access point in cases where a default 20 MHz bandwidth has been configured. The primary channel is the channel used to broadcast beacon data, as will be discussed herein, but the parabola mechanism used in the prior art will falsely indicate this primary channel in cases where an access point has been configured to non-default bandwidths (e.g. 40 MHz, 80 MHz, or 160 MHz), which will show a peak at a frequency that is not aligned with the access point's primary channel.

Furthermore, the conventional access point display 50 does not depict channel utilization of each channel in a manner that a technician is able to easily assess. Thus, current technologies, such as the conventional access point display 50, used to detect and report frequency usage by access points are unable or inadequate to allow a user to quickly and easily assess wireless channel interference, the attributes of the various access points depicted, channel utilization, and other considerations associated with access points and wireless channel interference that a technician needs when configuring and deploying access points with reduced interference.

A system as described herein detects wireless channel utilization by access points and identifies whether communication frequencies used by the access points overlap. The system generates a wireless channel interference interface that graphically indicates the frequency usage of access points that transmit over a bandwidth of frequencies. The channel interference interface also indicates access points whose primary frequencies overlap by displaying an indication of the overlapping access points in connection with the channels of their primary frequencies. For example, the channel interference interface may include a graph that indicates a set of wireless communication channels and for each channel, an indication of the access points using the channel, such as by placing the indication of the access points on the graph in association with the channel.

By operating in such a manner, the system improves the ability of access points to avoid frequencies in which interference occurs or is likely to occur and the ability of technicians to configure new and existing access points to avoid channels on which interference occurs or is likely to occur. Furthermore, in some embodiments, operating in such a manner allows the system to control a channel scanner such that a subset of frequency channels associated with a wireless standard are scanned by the channel scanner. Thus, the systems, methods, and processes disclosed herein improve the technical field of wireless network access point identification and analysis at least by providing 1) a user interface that more clearly indicates access points, channel utilization, and frequency bandwidths on which the access points operate than conventional systems for wireless network access point identification and analysis, 2) a user interface that improves the ability of technicians and computing systems to configure access points over the current level offered by conventional systems for wireless network access point identification and analysis, and 3) provides greater control over channel scanners used by wireless network access point identification and analysis systems than conventional systems.

In various embodiments, the systems, methods, and processes disclosed herein may be configured to launch and populate a channel interference interface that includes only a subset of the wireless channels that have been scanned or can be scanned for access points and frequency usage. The channel interference interface may include a channel adjustment component, such as a scrollbar or other user-navigable interface, which enables a user to modify the channels in the subset of channels that are shown. This arrangement is particularly advantageous for systems with smaller display screens as this arrangement enables a user to focus on fewer channels at a time and more easily and effectively assess interference on particular channels of interest. This arrangement also allows the user to easily navigate (e.g., scroll through or otherwise adjust) the channels that are shown in the channel interference interface.

In some cases, the system may be configured to control a scanner to scan to only those channels in the subset of channels that are currently shown in the channel interference interface. This can reduce the processing burden and power usage by the system, which is advantageous in portable battery powered systems. In some cases, user adjustment (e.g., scrolling) of the channels shown in the channel interference interface may trigger updated scanning by the scanner for the adjusted subset of channels that are shown.

In some cases, if there are access points using adjacent channels that are not currently shown in the channel interference interface, but the frequency bandwidth utilized by such access points overlaps channels that are shown in channel interference interface, the system may be configured to include an indication of the overlapping frequency bandwidth of such "adjacent" access points in the channel interference interface. A bandwidth indicator for such adjacent access points may be shown extending into the channel interference interface (e.g., from a side of the interface) and overlapping one or more of the channels that are shown. If a user adjusts the subset of channels that are shown in the channel interference interface (e.g., by scrolling), the bandwidth indicator of such adjacent access points may be modified or removed depending on the bandwidth of the adjacent access points and the frequencies of the adjusted subset of channels shown in the channel interference interface. This arrangement advantageously allows a user to see overlapping bandwidth usage by adjacent access points not otherwise shown in the channel interference interface, and if desired, scroll the interface toward the adjacent access points to bring the access points (and their primary frequency channel or channels) into the channel interference interface, or scroll away from such adjacent access points to frequency channels not overlapped by the bandwidth of such access points

In various embodiments, the systems, methods, and processes disclosed herein may be configured to populate a channel interference interface with one or more merged access point indicators that combine indicators of access points that would otherwise be shown adjacent to or overlapping each other in the interface. This arrangement is particularly advantageous for systems with smaller display screens as this arrangement reduces cluttering of the interface. A merged access point indicator may also include an indication of the number of access points that are represented by the merged access point indicator. A merged access point indicator may also be configured for user selection, wherein selection of the merged access point indicator causes the system to launch and populate a second channel interference interface depicting specific details of the access points that were represented by the merged access point indicator. This arrangement is advantageous as it allows a user to evaluate communication interference collectively and individually by access points that are represented by the merged access point indicator.

Unless the context requires otherwise, throughout the specification and claims which follow, the word "comprise" and variations thereof, such as, "comprises" and "comprising" are to be construed in an open, inclusive sense, for example "including, but not limited to."

Reference throughout this specification to "one embodiment" or "an embodiment" means that a particular feature, structure or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments, and references to "some embodiments," "other embodiments," "example embodiments," "one embodiment," "an embodiment," etc., do not preclude the combination of the particular features, structures, or characteristics of any of the embodiments with any of the other embodiments described herein.

Throughout this specification and the claims, references to causing a device, such as a computing device or other device, to perform an action, execute instructions, receive data, transmit data, or be affected in some manner, may be made. One of ordinary skill in the art may recognize that a device may cause a second device to be affected in any of the manners listed above by transmitting instructions to the second device, transmitting data to the second device, transmitting instructions or data to a third device that can communicate with the second device, presenting instructions to a user to affect the second device, take other actions that affect the second device, or some combination thereof. In the embodiments described herein, any one or more of these methods may be used to cause a second device to be affected in some manner.

As used in this specification and the appended claims, the singular forms "a," "an," and "the" include plural referents unless the content clearly dictates otherwise. The term "or" is generally employed to include "and/or" unless the content clearly dictates otherwise. The term "and/or" is generally employed to include an inclusive or.

The headings and Abstract of the Disclosure provided herein are for convenience only and do not interpret the scope or meaning of the embodiments.

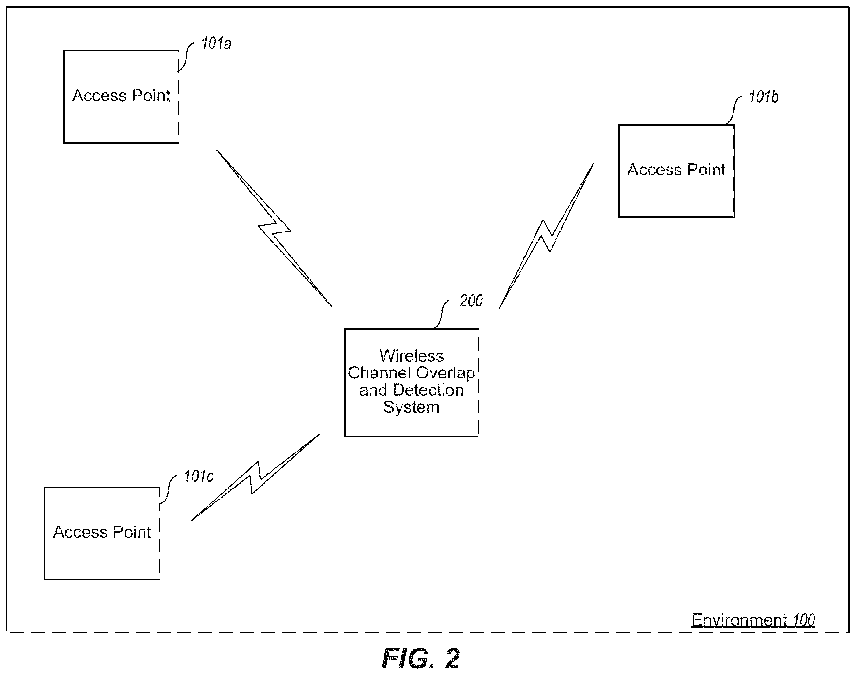

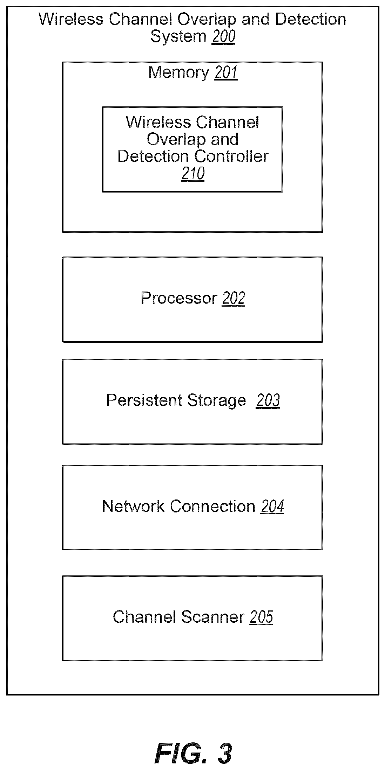

Figure 2 is a display diagram of a sample environment 100 in which a wireless channel overlap and detection system may operate, according to one or more embodiments of the present disclosure. The environment 100 includes access points 101a-101c (collectively as "access points 101" or individually as "access point 101") and a wireless channel overlap and detection system 200. The wireless channel overlap and detection system 200 is described further in connection with Figure 3 below.

The access points 101 are each access points that transmit and receive wireless signals in order to provide user devices with access to one or more wired or wireless networks, such as the Internet, a local network, a wide area network ("WAN"), a local area network ("LAN"), a Wi-Fi network, other wired or wireless networks, or some combination thereof. The access points may be configured to provide access to wired or wireless networks via one or more wired or wireless communication standards, such as the 2.4 GHz Wi-Fi standard, the 5 GHz Wi-Fi standard, the 6 GHz Wi-Fi standard, the Bluetooth standard, the Zigbee standard, the Ethernet standard, other wired or wireless communication standards, or some combination thereof. Each of the access points 101 may transmit or receive data using a communication bandwidth that comprises one or more wireless frequency channels. Each access point 101 is generally configured to transmit or receive data via a primary frequency channel. Furthermore, each access point 101 may transmit one or more beacon data packets that indicate one or more attributes of the access point, such as a primary channel of the access point, a bandwidth of the access point, a signal strength of a wireless signal transmitted by the access point, communication standards usable by the access point, a name of the access point, other attributes of the access point, or some combination thereof.

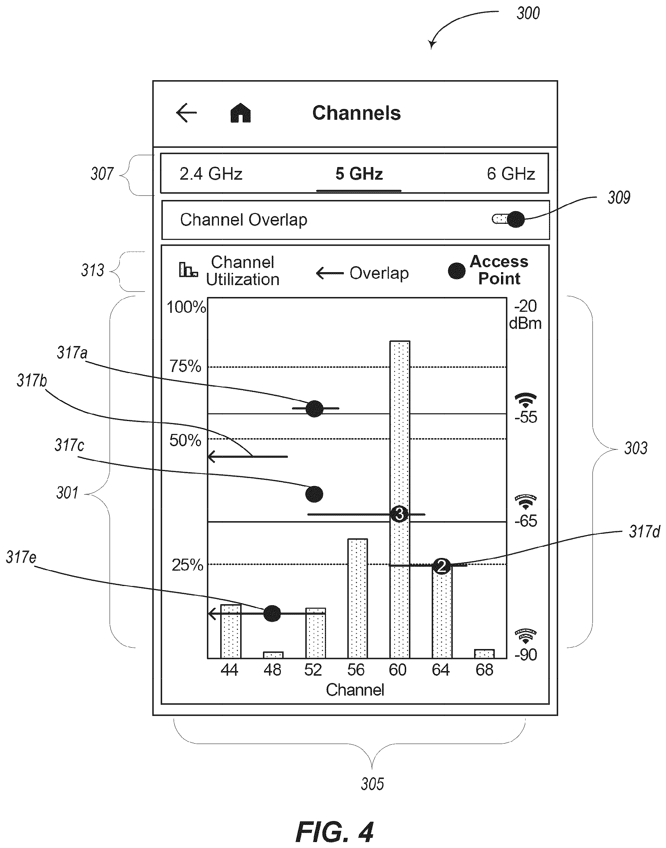

In some embodiments, in the sample environment 100, the wireless channel overlap and detection system 200 receives an indication of one or more of the access points 101, such as by receiving one or more beacon data packets transmitted by the access points 101. For each access point 101 for which a beacon data packet was received, the wireless channel overlap and detection system 200 identifies a primary frequency channel of the access point, a bandwidth of the access point, a signal strength of the access point, a channel utilization of the primary channel of the access point, a name of the access point, other attributes of the access point, or some combination thereof. The wireless channel overlap and detection system 200 launches and populates a channel interference interface, such as the channel interference interface 300 or a second channel interference interface 400 described below in connection with Figures 3 and 4 respectively, based on the data identified for each access point 101.

Figure 3 is a block diagram of a sample wireless channel overlap and detection system 200, according to one or more embodiments of the present disclosure. In various embodiments, the wireless channel overlap and detection system 200 (the "system 200") includes one or more of the following: a computer memory 201 for storing programs and data, including data associated with the access points 101, an operating system including device drivers; a processor 202 for executing computer programs; a persistent storage device 203, such as a hard drive or flash drive for persistently storing programs and data; a network connection 204 for communicatively connecting to one or more computer devices, functions or components of the access points 101, and/or other computer systems, to send and/or receive data, such as via the Internet or another network and associated networking hardware, such as switches, routers, repeaters, electrical cables and optical fibers, light emitters and receivers, radio transmitters and receivers, and the like; and a channel scanner 205 for scanning one or more frequency channels. In some embodiments, the processor 202 may be one or more processors, microcontrollers, or other computer components. In some embodiments, any of the processors, microcontrollers, or other computer components, either alone or in combination, can perform any of the functions or acts described herein. In various embodiments, the system 200 additionally includes user input and output devices, such as a keyboard, a mouse, display devices, etc.

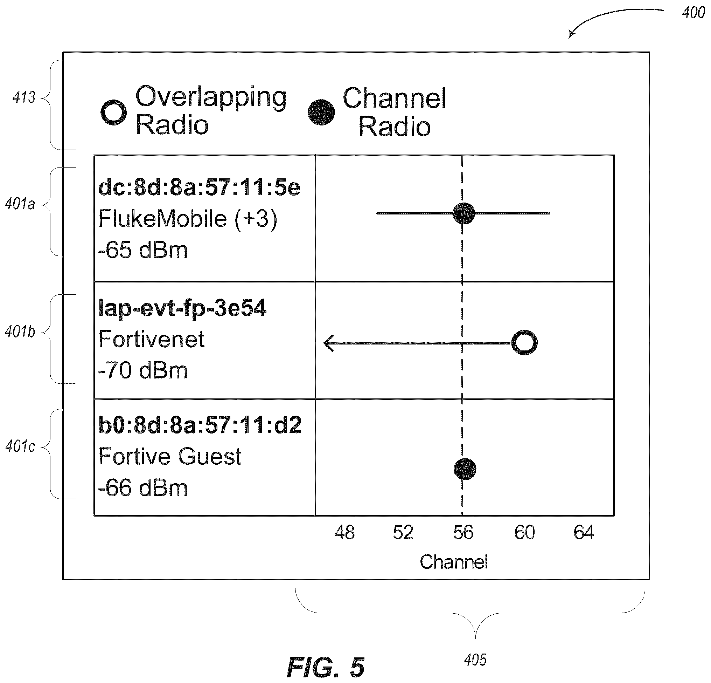

In at least one embodiment, the memory 201 includes a wireless channel overlap and detection controller 210 (the "controller 210"). The controller 210 performs the core functions of the system 200, such as to display the interfaces 300 and 400 described below in connection with Figures 3 and 4; to perform the processes 500, 600, 700, and 800 described below in connection with Figures 5, 6, 7, and 8; to control a channel scanner, such as the channel scanner 205; to perform other functions of the system 200; or some combination thereof. In particular, the controller 210 may identify attributes of one or more access points; launch and populate one or more interfaces, such as the channel interference interfaces 300 and 400; control a channel scanner, such as the channel scanner 205; merge access point indicators; merge bandwidth indicators; receive user input; perform other functions of the system 200; or some combination thereof.

In an example embodiment, the controller 210 and/or computer-executable instructions stored on memory 201 of the system 200 in Figure 3 are implemented using standard programming techniques. For example, the controller 210 and/or computer-executable instructions stored on the memory 201 of the system 200 may be implemented as a "native" executable running on processor 202, along with one or more static or dynamic libraries. In other embodiments, the controller 210 and/or computer-executable instructions stored on memory 201 of the system 200 may be implemented as instructions processed by a virtual machine that executes as some other program.

The embodiments described above may also use synchronous or asynchronous client-server computing techniques. However, the various components may be implemented using more monolithic programming techniques as well, for example, as an executable running on a single CPU computer system, or alternatively decomposed using a variety of structuring techniques known in the art, including but not limited to, multiprogramming, multithreading, client-server, or peer-to-peer, running on one or more computer systems each having one or more CPUs. Some embodiments may execute concurrently and asynchronously, and communicate using message passing techniques. Equivalent synchronous embodiments are also supported. Also, other functions could be implemented and/or performed by each component, and in different orders, and by different components, yet still achieve the functions of the system 200.

In addition, programming interfaces to the data stored as part of the controller 210 in Figure 3 can be available by standard mechanisms such as through C, C++, C#, Java, and Web APIs; libraries for accessing files, databases, or other data repositories; through scripting languages such as JavaScript and VBScript; or through Web servers, FTP servers, or other types of servers providing access to stored data. The controller 210 may be implemented by using one or more database systems, file systems, or any other technique for storing such information, or any combination of the above, including implementations using distributed computing techniques.

Different configurations and locations of programs and data are contemplated for use with techniques described herein. A variety of distributed computing techniques are appropriate for implementing the components of the embodiments in a distributed manner including but not limited to TCP/IP sockets, RPC, RMI, HTTP, Web Services (XML-RPC, JAX-RPC, SOAP, and the like). Other variations are possible. Also, other functionality could be provided by each component, or existing functionality could be distributed amongst the components in different ways, yet still achieve the functions of the system 200 and the access points 101.

Furthermore, in some embodiments, some or all of the components or portions of the controller 210, and/or functionality provided by the computer-executable instructions stored on memory 201 of the system 200 may be implemented or provided in other manners, such as at least partially in firmware and/or hardware, including, but not limited to, one or more application-specific integrated circuits (ASICs), standard integrated circuits, controllers (e.g., by executing appropriate instructions, and including microcontrollers and/or embedded controllers), field-programmable gate arrays (FPGAs), complex programmable logic devices (CPLDs), and the like. Some or all of the system components and/or data structures may also be stored as contents (e.g., as executable or other machine-readable software instructions or structured data) on a computer-readable medium (e.g., as a hard disk; a memory; a computer network or cellular wireless network, or a portable media article to be read by an appropriate drive or via an appropriate connection, such as a DVD or flash memory device) so as to enable or configure the computer-readable medium and/or one or more associated computing systems or devices to execute or otherwise use or provide the contents to perform at least some of the described techniques. Such computer program products may also take other forms in other embodiments. Accordingly, embodiments of this disclosure may be practiced with other computer system configurations.

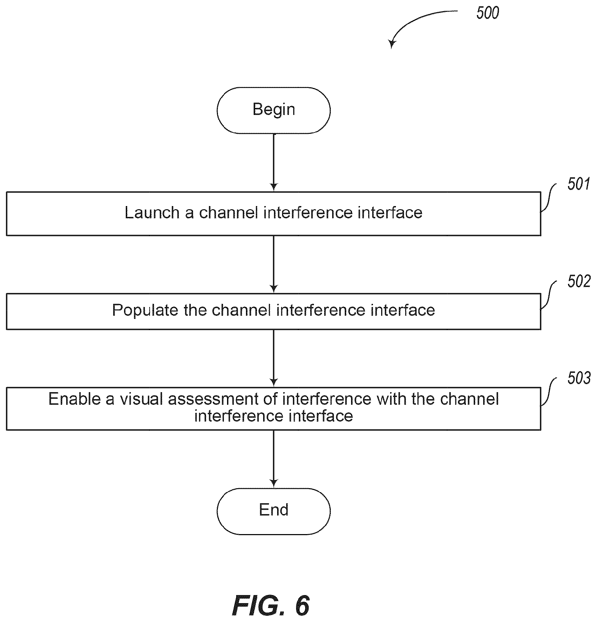

Figure 4 is a display diagram of a sample channel interference interface 300, according to one or more embodiments of the present disclosure. The channel interference interface 300 includes a channel utilization axis 301, a signal strength axis 303, a frequency channel axis 305, a wireless standard selection user interface component 307, a channel overlap user interface component 309, a graph key 313, and one or more indicators 317a-317e (collectively as "indicators 317" or individually as "indicator 317"). The channel interference interface 300 may be populated by the system 200, such as by using one or more of the processes 500-800 described below in connection with Figures 6-8. In some embodiments, the channel interference interface 300 is displayed via a display connected to the system 200. In some embodiments, the system 200 transmits instructions to display the channel interference interface 300 to a user device.

The channel utilization axis 301 indicates a utilization of one or more wireless frequency channels. In some embodiments, the system 200 identifies a utilization of a wireless frequency channel based on one or more beacon data packets received from one or more access points, such as the access points 101 described above in connection with Figure 2. The vertical shaded bars shown in graphical form in Figure 4 indicate examples of reported channel utilization.

The signal strength axis 303 indicates a signal strength of one or more access points In some embodiments, the system 200 identifies a signal strength of an access point based on one or more beacon data packets received from one or more access points, such as the access points 101 described above in connection with Figure 2. In the example shown in Figure 4, vertical positioning of the access point indicators 317 indicates the signal strength of the respective access points

The frequency channel axis 305 indicates primary channels on which access points transmit or receive data. In some embodiments, the system 200 identifies the primary channel for each access point based on one or more beacon data packets received from the access points, such as the access points 101 described above in connection with Figure 2. In some embodiments, the frequency channel axis 305 displays a subset of a larger plurality of frequency channels used by a wireless standard, such as the wireless standard indicated by the wireless standard selection user interface component 307.

The wireless standard selection user interface component 307 receives user input indicating a wireless standard for which access points are to be scanned by a channel scanner, such as the channel scanner 205 described above in connection with Figure 3. The system 200 may cause the channel scanner to scan for access points communicating data via the frequency channels corresponding with a selected wireless standard. For example, Figure 4 indicates that the 5GHz Wi-Fi standard is selected, and that the channel scanner is scanning or has scanned channel frequencies associated with the 5GHz Wi-Fi standard.

The channel overlap user interface component 309 receives user input indicating that the overlap of frequency channel usage by access points is to be displayed via the channel interference interface 300. Activating the channel overlap user interface component 309 may cause the display of the access points indicators 317 to include one or more bandwidth indicators. In some embodiments, the bandwidth indicators indicate a highest frequency and a lowest frequency at which an access point represented by an access point indicator is communicating data.

The graph key 313 indicates the meaning of one or more indicators presented via the graph of the channel interference interface 300. The graph key 313 of Figure 4 includes an indication of the meaning of the channel utilization indicators, the bandwidth overlap indicators, and the access point indicators.

The indicators 317 are each access point indicators, bandwidth indicators, or a combination thereof. Each of the indicators 317 indicate at least one access point. In some embodiments, the indicators 317 include one or more bandwidth indicators when the channel overlap user interface component 309 is activated. Indicator 317a is an example of an access point indicator that includes a bandwidth indicator, and represents an access point communicating via a primary channel "52," that has a frequency bandwidth spanning from a frequency in or near frequency channel "48" to a frequency in or near frequency channel "56", and has a signal strength of about "-55 dBm." The channel interference interface 300 also indicates that channel "52" has a channel utilization of about 12 percent.

Indicator 317b is an example of a bandwidth indicator associated with an access point communicating via a primary frequency channel that is outside of the range of the channel axis 305 as currently displayed by the channel interference interface 300. The access point (adjacent to but not shown in the current channel interference interface) communicates using a bandwidth that extends into the current channel interference interface to a highest frequency in or near channel "48." In some embodiments, the channel interference interface permits a user to alter the channels displayed in the channel interference interface, such as by including a user interface element that allows the user to change the range of channels indicated by the channel axis 305. Such a user interface element may be a scrollbar, one or more user interface elements that permit a user to enter a maximum frequency channel and minimum frequency channel, an element that is not visible to the user that detects user input indicating that the user intends to "scroll" through the channels, other user interface elements that allow a user to alter the maximum frequency channel and minimum frequency channel indicated by the channel axis 305, or some combination thereof.

Indicator 317c is an example of an access point indicator that does not include a bandwidth indicator, and represents an access point communicating via a primary channel "52" and a signal strength of about "-70 dBm." Indicator 317d is an example of a merged access point indicator that represents two access points that each communicate via frequency channel 64 as a primary channel and that each have a signal strength within a range of signal strengths that includes about "-70 dBm." Indicator 317d additionally includes a merged bandwidth indicator that indicates a highest frequency used by the two access points included in the merged access point indicator 317d and the lowest frequency used by the two access points included in the merged access point indicator 317d. In the case of indicator 317d, the lowest frequency is in or near frequency channel "60" and the highest frequency is in or near frequency channel "68." Indicator 317e indicates an access point with a bandwidth that includes a lowest frequency below the range of frequency channels indicated by the frequency channel axis 305 and a highest frequency in or near frequency channel "52."

In some embodiments, the system 200 displays a channel interference interface, such as the channel interference interface 300, as part of performing one or more of the acts described below in connection with processes 500-800. In such embodiments, the system enables a user to assess interference experienced by an access point on a primary channel based on the one or more channel utilization indicators, the one or more bandwidth indicators, and the one or more access point indicators. For example, the two access points using channel "64" as a primary channel, indicated by the indicator 317d, have a combined frequency bandwidth that stretches into frequencies overlapping channel "60," which is highly utilized by three access points operating with channel "60" as their primary channel. Continuing the example, the frequencies utilized by channels "48" and "52" are used by at least two access points, either as a primary channel or as within the frequency bandwidth of an access point. Furthermore, there is no access point using channel "68" as its primary channel or having a frequency bandwidth that overlaps the frequencies utilized by channel "68." Thus, an access point using channel "64" as a primary channel, or that includes channel "64" within its frequency bandwidth, may experience more interference than an access point that uses channels "48" or "52," and an access point that uses channels "48" or "52" may experience more interference than an access point that uses channel "68."

In some embodiments, the channel interference interface 300 allows a user to change the frequency channels indicated by the frequency axis 305. In such embodiments, the system may cause the channel scanner to limit the channels scanned to the frequency channels indicated by the frequency axis 305, such as limiting the channels scanned to a subset of the frequency channels associated with a selected wireless standard. The subset of the frequency channels associated with the wireless standard may be a subset of the frequency channels indicated by the frequency axis 305. The subset of the frequency channels associated with the wireless standard may be frequency channels indicated by access point indicators, bandwidth indicators, merged access point indicators, merged bandwidth indicators, or some combination thereof.

In embodiments where the channel scanner is limited to a subset of frequency channels associated with a selected wireless standard, the ability of the channel scanner, and thus the system 200 as a whole, to scan wireless channels is improved. For example, limiting the frequency channels scanned by the channel scanner allows a channel scanner to receive additional data regarding frequency channels of interest to a user in a manner that is faster, consumes less memory, consumes less processing power, etc., than would be possible if the channel scanner also scanned channels for which the user is uninterested. In some embodiments, the system may limit the channel scanner to a subset of frequency channels by increasing the rate at which the frequency channels included in the subset of frequency channels are scanned, and decreasing the rate at which frequency channels not included in the subset of frequency channels are scanned. In such embodiments, the functioning of the channel scanner and system 200 are also improved over the functioning of conventional systems in a similar way to limiting the channel scanner to only the subset of frequency channels.

Figure 5 is a display diagram of a sample second channel interference interface 400, according to one or more embodiments of the present disclosure. The second channel interference interface 400 includes one or more indicator sections 401a-401c (collectively as "indicator sections 401" or individually as "indicator section 401"), a channel frequency axis 405, and a graph key 413. The second channel interference interface 400 may be populated by the system 200, such as by using one or more of the processes 500-800 described below in connection with Figure 6-8. In some embodiments, the second channel interference interface 400 is displayed via a display connected to the system 200. In some embodiments, the system 200 transmits instructions to display the second channel interference interface 400 to a user device remote from the system 200.

The channel frequency axis 405 may operate similarly to the channel frequency axis 305 described above in connection with Figure 4. In some embodiments, the channel frequency axis 405 is centered on a frequency channel corresponding with a primary frequency channel of one or more access points included in a merged access point indicator, such as a merged access point indicator that is selected before the second channel interference interface 400 is presented, launched, or otherwise caused to be displayed. In some embodiments, user selection of a merged access point in the channel interference interface 300 may automatically cause the second channel interference interface 400 to be populated and displayed. The frequency channel on which the channel axis 405 is centered may be determined based on a merged access point indicator, such as a merged access point indicator selected in the channel interference interface 300 before the second channel interference interface 400 is presented, launched, or otherwise caused to be displayed.

The graph key 413 indicates the meaning of one or more indicators presented in the indicator sections 401. The graph key 413 indicates that an "overlapping radio" is depicted as a hollow circle, and a "channel radio" is depicted as a filled-in circle. A "channel radio" may represent an access point whose primary channel is the frequency channel on which the channel frequency axis 405 is centered. An "overlapping radio" may represent an access point whose primary channel is not the frequency channel on which the channel frequency axis 405 is centered, but whose frequency bandwidth includes frequencies in or near the frequency channel on which the channel axis 405 is centered. For example, if the system 200 launches the second channel interference interface 400 in response to a selection of a merged access point indicator that represents access points whose primary channel is "56," the channel axis 405 is centered on channel "56." Continuing the example, access point indicators for access points that use channel "56" as a primary channel are represented as a "channel radio." Furthermore, in this example, access point indicators for access points that use a channel other than "56," but have a frequency bandwidth that includes frequencies in or near channel "56," are represented as an "overlapping radio."

The indicator sections 401 each include information regarding an access point associated with the indicator and an indication of the frequency channels (bandwidth) used by the access point. In the second channel interference interface 400, each indicator section 401 includes a network address of the access point associated with the indicator, one or more names of the access point, a signal strength of the access point, a bandwidth indicator, and a primary channel indicator. The bandwidth indicator may be represented in the section of the second channel interference interface 400 that includes the frequency channel axis 405. In some embodiments, the bandwidth indicator is represented as a horizontal line segment with a first point at the highest frequency used by the access point and a second point at the lowest frequency used by the access point. In some embodiments, where the frequency bandwidth extends past the channels depicted in the second channel interference interface 400, the system 200 adjusts the bandwidth indicator to include an indication that the bandwidth encompasses frequencies not currently displayed in the channel interference interface 400. For example, the system 200 may display an arrow, as seen in the indicator section 401b which indicates an access point whose bandwidth extends beyond the channels depicted in the second channel interference interface 400.

In another example, an indicator section may be associated with an access point whose primary channel is not within the range of frequency channels indicated by the frequency channel axis 405, but whose frequency bandwidth includes the frequency channel on which the frequency channel axis 405 is centered. In such an example, an indicator section may be included in the second channel interference interface to represent such an access point, and the indicator section may include a bandwidth indicator that represents the frequency bandwidth of the access point without including an access point indicator that indicates the primary channel used by the access point.

Although the channel interference interface 300 and the second channel interference interface 400 are each depicted in Figures 3 and 4 without color, embodiments are not so limited, and some embodiments may use color to represent any of the information that may be represented in the interfaces 300 and 400. In some embodiments, the various access point indicators, bandwidth indicators, merged access point indicators, merged bandwidth indicators, other user interface components, or some combination thereof, may be colored in different ways to indicate certain information, certain relationships between the indicators or components, other information helpful to enable a visual assessment of interference for the access points represented by the various indicators, or some combination thereof. For example, a merged access point indicator that represents a threshold number of access points may be colored differently than other merged access point indicators. In another example, indicators for access points that use a primary channel with a channel utilization that exceeds a threshold range may be colored differently than other indicators for access points that use a primary channel with a channel utilization within the threshold range.

Figure 6 is a flow diagram of a sample process 500 to enable a visual assessment of interference via a channel interference interface, according to one or more embodiments of the present disclosure. Any of the aspects of the process 500 may be performed by the system 200, a channel scanner, another computing device, or some combination thereof.

The process 500 begins at act 501, where the system 200 launches a channel interference interface. In some embodiments, the channel interference interface is an interface similar to the channel interference interface 300, described above in connection with Figure 4. The channel interference interface depicts a relationship between one or more access point indicators, one or more bandwidth indicators, and one or more channel utilization indicators. In such embodiments, the depicted relationship may be indicative of interference on a channel. For example, the interface may depict one or more relationships between multiple access points by depicting that at least one of the multiple access points use a similar primary channel, that at least one of the multiple access points have a frequency bandwidth that include one or more channels, the channel utilization of channels used by the multiple access points, a signal strength of each of the multiple access points, other depictions of a relationship between access points, or some combination thereof. In some embodiments, one or more indicators, user interface elements, or some combination thereof, may be colored based on the relationships between multiple access points.

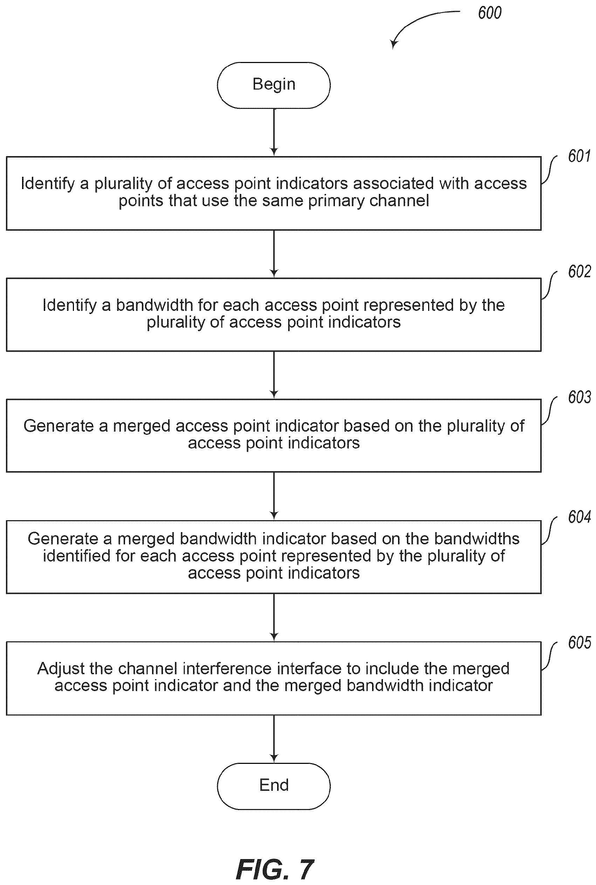

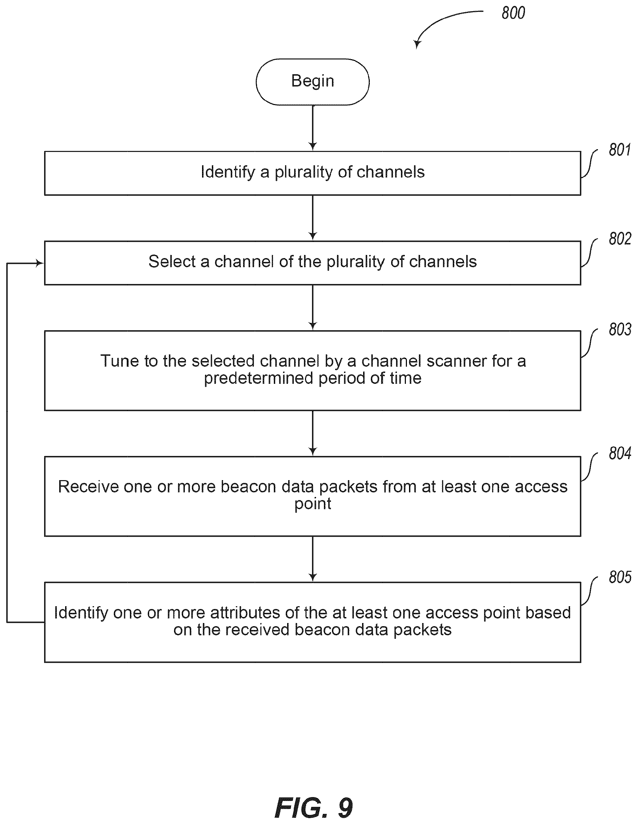

The process 500 proceeds to act 502, where the system 200 populates the channel interference interface. In some embodiments, the system 200 populates the channel interference interface with access point indicators, bandwidth indicators, and channel utilization indicators. In some embodiments, as part of performing act 502, the system 200 generates one or more merged access point indicators, one or more merged bandwidth indicators, or some combination thereof, such as by using the process 600 described below in connection with Figure 7. In some embodiments, the system 200 populates the channel interference interface based on sensed data associated with a plurality of access points In such embodiments, the sensed data may be received from a channel scanner, such as the channel scanner 205 described above in connection with Figure 3. In some embodiments, the sensed data is received by using the process 800, described below in connection with Figure 9.

The process 500 proceeds to act 503, where the system 200 enables a visual assessment of interference via the channel interference interface. In some embodiments, the visual assessment of interference includes an assessment of interference experienced by an access point on a primary channel. In some embodiments, the visual assessment is enabled based on one or more channel utilization indicators, one or more bandwidth indicators, and one or more access point indicators. In such embodiments, the relationship between the various indicators may be used to enable the visual assessment of interference. For example, the channel interference interface may indicate that a first channel has a utilization above a threshold amount, that multiple access points with varying signal strengths use the channel as a primary channel, that multiple frequency bandwidths of access points include the frequency channel, or some combination thereof. Based on these indications by the channel interference interface, a user is able to visually assess whether interference is likely to occur on the first channel, whether a second channel would be less likely to experience interference, or make other visual assessments.

In some embodiments, at act 503, the system 200 generates one or more recommended actions to reduce interference on a particular channel. For example, the recommended actions may include changing the configuration of one or more access points to use a different primary channel that is less likely to experience interference, to change the bandwidth of the access points, to raise or lower the antenna power of the access points, to take other actions that may reduce interference, or some combination thereof. In some embodiments, the system 200 generates the recommended actions based on an assessment of interference detected for one or more frequency channels. In such embodiments, the assessment of interference may be based on the channel utilization, characteristics or attributes of one or more access points, bandwidths of one or more access points, signal strengths of one or more access points, other data that may be used to assess interference experienced on a frequency channel, or some combination thereof. For example, a channel that has a channel utilization that is greater than a threshold value may be more likely to experience interference than a channel with channel utilization less than the threshold value. In another example, a channel that is used by one or more access points as a primary channel, that is included within the frequency bandwidth of one or more access points, or some combination thereof, may be more likely to experience interference than a channel that is not used by any access point as a primary channel, is not within the frequency bandwidth of one or more access points, or some combination thereof.

In some embodiments, the system 200 may display one or more recommended actions to a user via a display that displays the channel interference interface. In some embodiments, the system 200 may transmit instructions to one or more access points to take one or more recommended actions. In such embodiments, the system 200 may transmit the instructions in response to user input approving the one or more actions to be taken.

After act 503, the process 500 ends.

Figure 7 is a flow diagram of a sample process 600 to generate a merged access point indicator, according to one or more embodiments of the present disclosure. Any of the aspects of the process 600 may be performed by the system 200, a channel scanner, another computing device, or some combination thereof.

The process 600 begins, after a start block, at act 601, where the system 200 identifies a plurality of access point indicators associated with access points that use the same primary channel. In some embodiments, the access point indicators identified at act 601 use a primary channel within a threshold range of primary channels. In some embodiments, system 200 identifies the plurality of access point indicators based on a determination that signal strengths of the identified access points are each within a threshold range of signal strengths of each other. For example, if a first access point using a primary channel has a signal strength of -20dBm, a second access point using the same primary channel has a signal strength of -23 dBm, a third access point using the same primary channel has a signal strength of -30 dBm, and the threshold range is -5dBm, the first access point and second access point are identified at act 601 because their signal strengths are within the threshold signal strength range of each other (that is, their signal strengths are within -5dBm of each other). In such an example, the third access point is not identified or selected for inclusion in the plurality of access points because its signal strength is not within the threshold range, -5dBm, of either of the other two access points. In some embodiments, the system 200 selects the threshold range based on one or more factors, such as the number of access points depicted in a channel interference interface, whether the depictions of one or more access point indicators included in the channel interference interface appear to overlap when viewed by a user, user configuration settings regarding the threshold range, other factors for selecting a threshold range of signal strengths, or some combination thereof.

The process 600 proceeds to act 602, where the system 200 identifies a bandwidth for each access point represented by the plurality of access point indicators.

The process 600 proceeds to act 603, where the system 200 generates a merged access point indicator based on the plurality of access point indicators. In some embodiments, the merged access point indicator is depicted differently, such as a different size, a different color, a different shape, etc., than other access point indicators. In such embodiments, the depiction of the merged access point indicator may be based on the highest signal strength and the lowest signal strength of the access points represented by the merged access point indicator, the number of access points included in the merged access point indicator, the threshold range used in act 601, other factors for changing the depiction of an access point indicator, or some combination thereof.

The process 600 proceeds to act 604, where the system 200 generates a merged bandwidth indicator based on the bandwidths identified for each access point represented by the plurality of access point indicators. In some embodiments, the system 200 generates the merged bandwidth indicator by identifying the highest frequency used by the plurality of access points and the lowest frequency used by the plurality of access points. In some embodiments, the merged bandwidth indicator is depicted differently, such as a different size, different color, a different shape, etc., than other bandwidth indicators. In such embodiments, the depiction of the merged bandwidth indicator may be based on one or more characteristics of access points included in the merged access point indicator, the number of access points using each frequency channel indicated by the merged bandwidth indicator, other factors for changing a depiction of a bandwidth indicator, or some combination thereof.

The process 600 proceeds to act 605, where the system adjusts the channel interference interface (such as the channel interference interface 300 in Figure 4) to include the merged access point indicator and the merged bandwidth indicator. In some embodiments, adjusting the channel interference interface may include removing the access point indicators and bandwidth indicators for access points included in the plurality of access points and replacing the removed indicators with the merged access point indicator and merged bandwidth indicator.

After act 605, the process 600 ends.

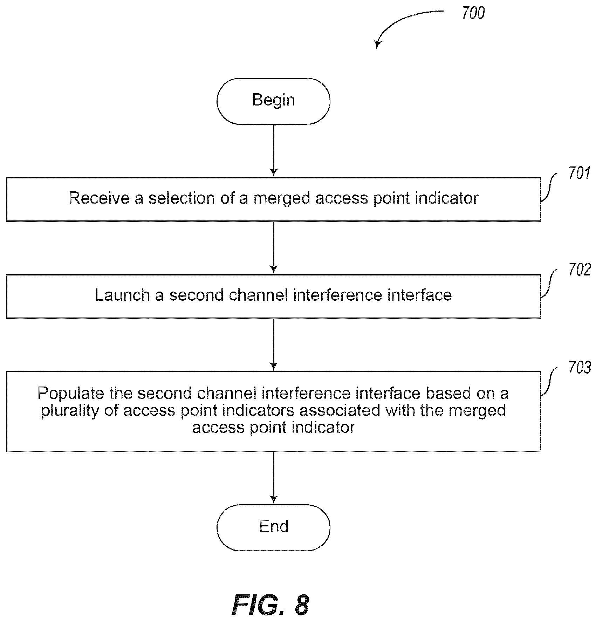

Figure 8 is a flow diagram of a sample process 700 to launch a second channel interference interface, according to one or more embodiments of the present disclosure. Any of the aspects of the process 700 may be performed by the system 200, a channel scanner, another computing device, or some combination thereof.

The process 700 begins, after a start block, at act 701, where the system 200 receives a selection of a merged access point indicator. The system 200 may receive the selection of the merged access point indicator from a channel interference interface, such as the channel interference interface 300 described above in connection with Figure 4.

The process 700 proceeds to act 702, where the system 200 launches a second channel interference interface. The second channel interference interface may be a second channel interference interface 400, described above in connection with Figure 5.

The process 700 proceeds to act 703, where the system 200 populates the second channel interference interface based on a plurality of access point indicators associated with the merged access point indicator.

After act 703, the process 700 ends.

Figure 9 is a flow diagram of a sample process 800 to scan wireless communication channels, according to one or more embodiments of the present disclosure. Any of the aspects of the process 800 may be performed by the system 200, a channel scanner, another computing device, or some combination thereof.

The process 800 begins, after a start block, at act 801, where the system 200 identifies a plurality of frequency channels. In some embodiments, the system 200 identifies the frequency channels based on a selection of a wireless communication standard, such as a selection received via the wireless standard selection component 307 described above in connection with Figure 4. In some embodiments, the system 200 identifies the frequency channels based on a range of frequency channels included in a frequency channel axis, such as the frequency channel axes 305 and 405 described above in connection with Figures 3 and 4 respectively, which may be a subset of a larger plurality of frequency channels included in the selected wireless communication standard.

The process 800 proceeds to act 802, where the system 200 selects a frequency channel of the plurality of channels.

The process 800 proceeds to act 803, where the system 200 causes a channel scanner to tune to the selected channel for a predetermined period of time. In some embodiments, the system 200 causes the channel scanner to tune to the selected channel by transmitting instructions to the channel scanner to tune to the selected channel. In some embodiments, the time period is configured based on user input. In some embodiments, the system 200 determines the predetermined time period based on data indicating the number of access points expected to be communicating signals via the selected frequency channel. Thus, in such embodiments, each channel may be scanned for different periods of time based on such a determination. For example, if the channel scanner receives data indicating two access points on a selected channel, the next time the channel scanner tunes to the selected channel the system 200 may determine to increase or decrease the period of time during which the channel scanner is tuned to the frequency channel based on a likelihood that additional access points may be found on the frequency channel. In such an example, the likelihood that additional access points may be found on the frequency channel may be determined based on a location of the channel scanner, a location of the system, a number of times that the channel scanner did not receive beacon data packets from additional access points, a number of times the channel scanner received beacon data packets from fewer access points, other factors that may impact a determination of the likelihood that another access point will be detected on the frequency channel, or some combination thereof.

The process 800 proceeds to act 804, where the system 200 receives one or more beacon data packets from at least one access point transmitting or receiving data by using the selected channel.

The process 800 proceeds to act 805, where the system 200 identifies one or more attributes of the at least one access point based on the received beacon data packets.

After act 805, the process proceeds to act 802, where the system 200 selects another channel of the plurality of channels. In some embodiments, the process 800 proceeds in this manner until the system 200 receives an indication that the process 800 is to end.

In some embodiments, the system 200 receives an indication that the plurality of channels are to change, such as an indication that a new wireless standard has been selected, an indication that the range of frequency channels indicated by a frequency channel axis has changed, a selection of one or more frequency channels received via user input, other indications that the plurality of channels are to change, or some combination thereof. In such embodiments, the system 200 may repeat the process 800 starting from act 801 in response to the indication that the plurality of channels is changing or has changed.

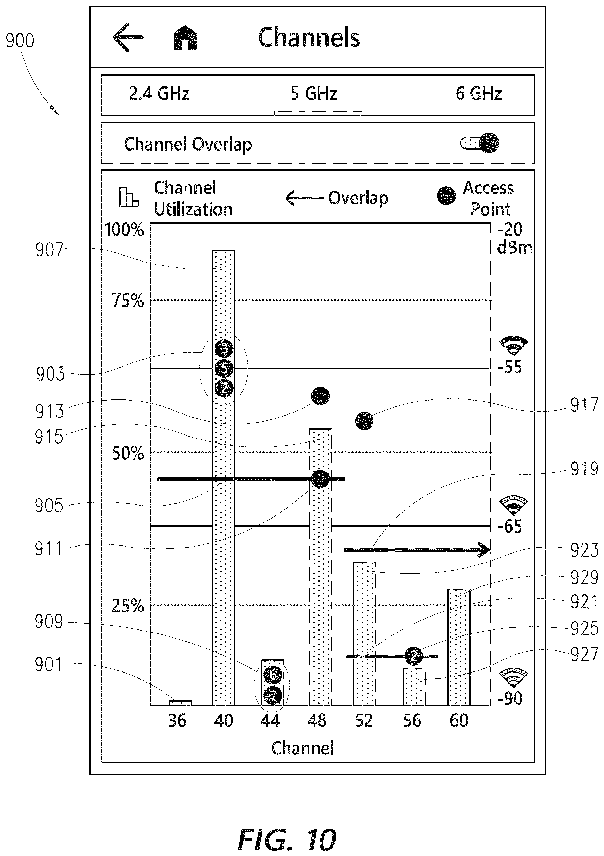

Figure 10 is a display diagram illustrating another example of a channel interference interface 900 according to one or more embodiments of the present disclosure. The channel interference interface 900 includes a channel utilization axis along a left side of the interface, a signal strength axis along a right side of the interface, and a frequency channel axis along a bottom of the interface. Like the interface 300 shown in Figure 4, the channel interference interface 900 further includes a wireless standard selection component, a channel overlap component, a graph key, and one or more indicators that individually and collectively provide an assessment of interference among the channels in a local wireless communication environment. The channel interference interface 900 may be populated by the system 200, such as by using one or more of the processes 500 to 800 described in connection with Figures 6-8. The channel interference interface 900 may be displayed by a remote display connected to the system 200 or on a local display, e.g., on a user device, in communication with the system 200.

By way of an assessment of interference enabled by the channel interference interface 900, it is recognized that channel 36 (as shown at reference 901) has no access points assigned to it and currently there is little to no utilization of the frequency of the channel.

It is further recognized that channel 40 has a high channel utilization, indicated by a channel utilization indicator 907, with a total of ten access points 903 currently assigned or allocated to channel 40 as a primary channel for communication. As illustrated by three user-selectable merged access point indicators labeled 3, 5, and 2, a group of three access points using channel 40 have a similar signal strength within their group, a group of five access points using channel 40 have a similar signal strength within their group, and a group of two access points using channel 40 have yet another similar signal strength within their group. As noted, each group represents a set of access points with respectively similar signal strengths, and communications by the ten access points on channel 40 collectively result in a high utilization of the frequency of the channel. There is also an overlap of bandwidth utilization from an access point 911 assigned to channel 48, as indicated by a bandwidth line 905, which also contributes to the high utilization of the frequency of channel 40.

Because these ten access points 903 have a strong signal strength (which is indicated by their position in the interface 900 with respect to the signal strength axis along a right side of the interface 900, an assessment of interference indicates they are likely experiencing high interference and that wireless network performance is expected to be degraded. Another contribution to the high interference on channel 40 might be due to the bandwidth overlap from the access point 905 operating on channel 48.

With this assessment of interference on channel 40 provided by the channel interference interface 900, guidance is provided on how the system 200, or the user of the system 200, can mitigate interference on channel 40 by guiding assignment or reassignment of one or more access point to a different primary channel. A recommendation may be provided, e.g., by a display or other output, to move (or reassign) where possible one or more of the existing access points to another channel. If the user is seeking to provision a new access point, suitable guidance may also include a recommendation to provision the new access points on a different channel other than channel 40, that is a channel having less interference than one or more other channels of the plurality of channels.

By way of an assessment of interference enabled by the channel interference interface 900, it is recognized that channel 44 has 13 access points assigned or allocated to it as a primary channel. These access points include a group of six access points with similar signal strength, and a group of seven access points with similar signal strength. However, it is also recognized from the interface 900 that the signal strength of all 13 access points (indicated with respect to the right side axis) is very low, and that the channel utilization of channel 44 (indicated with respect to the left side axis) is low. Thus, the assessment of interference leads to a conclusion that all of the access points are likely far away and will not interfere with an access point that is provisioned locally. Guidance may be provided indicating that a new access point can be provisioned at the location where the channel scan took place, with a reasonable expectation of good wireless network performance.

Turning to channel 48, an assessment of interference enabled by the channel interference interface 900 recognizes that the channel has two access points 911, 913 assigned or allocated thereto, and has relatively high channel utilization 915. Additionally, the access point 911 is configured to use an 80 MHz bandwidth spanning channels 36-48. The assessment of interference may lead to recognition that the lower depicted access point 911 (with a bandwidth utilization spanning channels 36-48) is nearby (due to the fact that it has a strong signal strength), but the high channel utilization on channel 48 is not primarily due to access point 911. Otherwise, utilization by the channels 36, 40, and 44 (overlapped by the bandwidth of the access point 911) would all have a comparable utilization. The high channel utilization on channel 48 is due in greater part to communications by the upper depicted access point 913 which has even a stronger signal strength. Guidance may be provided to examine details of the access points and the channel utilization to determine if access point 913 is broadcasting too many networks, and if so, to provision a new access point on a different channel to help share the load. In this manner, for example, the assessment of interference enables mitigation of interference on channel 48 by guiding an assignment or reassignment of an access point to a different channel among the plurality of channels, e.g., with lower channel utilization.

As to channel 52, the channel interference interface 900 indicates one access point 917 assigned to the channel. The assessment of interference indicates that although channel 52 is overlapped by bandwidth utilization from access points on two other channels (i.e., access point 925 on channel 56 and an access point on a channel not currently shown in the interface 900), indicated by two bandwidth overlap lines 919 and 921, the channel utilization 923 of channel 52 is moderately low. Guidance may be provided indicating that channel 52 is in a healthy condition to provide good wireless network performance.

An assessment of interference with respect to channel 56 indicates there are two access points (represented by a merged access point indicator 925) having a very low signal strength. Channel utilization 927 on channel 56 is also low. The channel interference interface 900 shows that one or both of the access points 925 is configured to use a bandwidth of 40 MHz that spans channels 52-56. Although there is some bandwidth overlap 919 with channel 56, the signal strengths of both access points 925 is relatively weak, so guidance may be provided indicating that provisioning a new access point on channel 56 should benefit from good wireless network performance.

Channel 60, as indicated in the channel interference interface 900, has no access points assigned thereto. However, the channel utilization 929 is above 25%. Additionally, bandwidth overlap 919 is detected from an adjacent channel to the right of the set of channels currently shown in the interface 900. A resulting diagnosis of channel 60, enabled by the channel interference interface 900, is that channel 60 may be expected to have a near zero channel utilization (instead of the channel utilization - above 25% - that is shown). The channel utilization 929 is due to an access point on an adjacent primary channel (e.g., channel 64 off-screen) to the right of channel 60, which is demanding bandwidth for wireless network traffic on channel 60. Guidance may be provided to a user or technician to scroll the channel interference interface 900 to the right to a new set of channels (including the adjacent primary channel having the access point with channel utilization 929) and further assess wireless interference conditions based on the new set of channels.

A primary channel in a wireless network is used by an access point for several important functions. Accurately identifying an access point's primary channel is necessary for network management and provisioning, including but not limited to: (1) signaling and management, because the primary channel is used for communicating beacon frames, probe responses, and other management frames with the access point, (2) backwards compatibility management, because it ensures compatibility with older devices that may not support wider channel widths, and (3) establishing initial connections, because networking devices use an access point's primary channel to establish an initial connection with the access point.

However, the relationship between the primary channel of an access point and the center frequency of the bandwidth used by the access point depends on the channel width being utilized. For standard 20 MHz channels, the primary channel is the same as the center frequency of the bandwidth. For access points using wider channels (e.g., 40 MHz, 80 MHz, 160 MHz), the primary channel is in only one of the 20 MHz segments within the wider channel. Thus, the center frequency of the total bandwidth utilized by the access point is different from the frequency of the access point's primary channel. For instance, in a 40 MHz channel, the primary channel could be in either the lower 20 MHz segment or in the upper 20 MHz segment, while the center frequency would between these two segments. As discussed previously in connection with Fig. 1, conventional solutions showing a parabola peaking between these lower and upper segments for example, may mislead user to identify an incorrect primary channel or conventional solutions simply lack this function.

With the conventional technology, e.g., as indicated in Fig. 1, technicians may be misled or simply cannot determine the primary channel of the access point corresponding to each parabola. In contrast, as indicated by the channel interference interface shown in Fig. 4 or Fig. 10, the respective primary channels of access points are unambiguously indicated by way of the positioning of the access point indicators in the channel interference interface. It is important to note that when provisioning a new access point (or reassigning an existing access point), the selection of a primary channel and channel width can significantly impact network performance. Proper channel selection helps avoid interference and optimizes Wi-Fi coverage and communication speed. Thus , the technology disclosed herein supports technicians or other users to diagnose or predict potential negative network performance issues, identifying interference root causes, etc., to improve network performance, e.g., by reducing interference, verifying and adjusting channel assignments, etc.

Figure 10 thus illustrates examples of technical problems that can be detected and shown by the channel interference interface 900. Access point indicators, signal strength indicators, merged (or grouped) access point indicators, channel utilization indicators, and overlap line indicators, and respective technical relationships between two or more of these indicators, provide the user (e.g., a Wi-Fi technician) with an ability to diagnose wireless network performance and act upon guidance to mitigate interference on wireless communication channels or otherwise improve a utilization of communication frequencies of the wireless communication channels. Access points may be provisioned, deployed, assigned, or reassigned to different primary channels in a way that avoids or reduces interference on one or more channels, resulting in improved utilization of communication frequencies in the wireless communication environment.

Various examples of systems described herein detect wireless channel utilization by access points and identify whether communication frequencies used by the access points overlap and thus are prone to interference. Examples of such systems may be configured to launch a channel interference interface that indicates channels of a plurality of channels along a first axis, access point signal strength along a second axis, and/or channel utilization along a third axis, and based on sensed data associated with the plurality of channels and a plurality of access points, populate the channel interference interface by positioning within the channel interference interface one or more access point indicators, one or more bandwidth indicators, and/or one or more channel utilization indicators, relative to the first, second, and third axes. Each access point uses a primary channel of the plurality of channels as indicated by a corresponding access point indicator and has a frequency bandwidth for wireless communication. The system may enable an assessment of interference on the plurality of channels based on the one or more access point indicators, the one or more bandwidth indicators, or the one or more channel utilization indicators, or optionally based on a relationship between two or more access points indicators, bandwidth indicators, or channel utilization indicators, wherein the relationship between the two or more access points indicators, bandwidth indicators, or channel utilization indicators, is indicative of interference on the channels.

The system may include any of the features described in the following paragraphs or in the above description, individually or in any combination.

In various examples, the channel interference interface may indicate a relationship between the one or more access point indicators, the one or more bandwidth indicators, or the one or more channel utilization indicators, wherein relationship may be indicative of interference on one or more channels of the plurality of channels; the system may receive sensed data from one or more access points in a wireless communication environment; the system may generate one or more access point indicators, one or more bandwidth indicators, one or more channel utilization indicators, or a combination thereof, based on the sensed data; each access point may use a primary channel of a plurality of channels in the wireless communication environment; each access point may have a frequency bandwidth for wireless communication; when populated, the channel interference interface may include one or more channel utilization indicators, each channel utilization indicator being aligned with a respective channel indicated along the first axis and positioned with respect to the third axis to indicate a channel utilization of the respective channel; one or more access point indicators, each access point indicator representing a respective access point in the plurality of access points, wherein each access point indicator is aligned with the first axis to indicate the primary channel of the respective access point and positioned with respect to the second axis to indicate the access point signal strength of the respective access point; one or more bandwidth indicators, each bandwidth indicator representing the frequency bandwidth of a respective access point in the plurality of access points; or a combination thereof; the system may mitigate interference on a channel by guiding an assignment or reassignment of an access point to a different channel among the plurality of channels among the plurality of channels based on the assessment of interference, wherein the guidance may be, for example, a display or indication of one or more channels in the channel interference interface that have lower channel utilization; and/or the different channel to which the access point is guided for assignment or reassignment may be determined based on an assessment of interference derived from the channel interference interface.

In various examples, the channel interference interface may include a merged access point indicator generated based on a set of access points, for example a set of access points having a signal strength within a threshold range of signal strength of each other; the channel interference interface may include a merged bandwidth indicator generated based on a combined frequency bandwidth of the set of access points; the system may be configured to receive input, e.g., by at least one processor, indicating a user selection of the merged access point indicator, and in response thereto, the system may launch a second channel interference interface based on the receipt of the user input; the second channel interference interface may include an indication (e.g., graphical indication) of one or more channels which in cases may be shown along a first axis, and an indication (e.g., graphical indication) of access point signal strength, which in cases may be shown along a second axis; the second channel interference interface may include an access point indicator for each respective access point represented by the merged access point indicator; each access point indicator may indicate (e.g., graphically) the primary channel used by the respective access point and the access point signal strength of the respective access point; the second channel interference interface may include a bandwidth indicator for each respective access point represented by the merged access point indicator; and/or the bandwidth indicators may indicate (e.g., graphically) the frequency bandwidth of the respective access point, and in some cases, each bandwidth indicator may comprise a line segment spanning from a lowest frequency utilized by the respective access point to a highest frequency utilized by the respective access point.

In various examples, the system may comprise a channel scanner configured to scan a plurality of channels to identify a plurality of access points and determine the frequency bandwidth utilized by each access point; for each respective channel of the plurality of channels, the channel scanner may be configured to tune to a respective channel for a period of time and receive one or more beacon data packets from at least one access point communicating via the respective channel; a beacon data packet may be indicative of a frequency bandwidth utilized by at least one access point for wireless communication, a signal strength of at least one access point, other data regarding at least one access point, or a combination thereof; the system may limit the channel interference interface to a subset of channels of a plurality of channels; the system may comprise a user-operable scrolling interface configured to scroll among the channels along a first axis to select a different subset of the plurality of channels; the channel interference interface may include a portion of a bandwidth indicator of an access point or a group of access points on a primary channel not included in a subset of channels; the portion of the bandwidth indicator may graphically indicate a range of frequencies utilized by an access point or group of access points that overlap with a frequency of one or more channels of a subset of the plurality of channels; and/or a channel scanner may be configured to periodically update the channel interference interface by periodically rescanning only the subset of channels of the plurality of channels.

In various examples, the system may include a channel scanner configured to scan a plurality of wireless communication channels for utilization of communication frequencies by a plurality of access points; the channel scanner may be configured to generate sensed data indicating the plurality of wireless communication channels and the plurality of access points, each access point of the plurality of access points having a primary channel and a frequency bandwidth for wireless communication; the system may include a wireless communication analyzer configured to launch a channel interference interface that indicates (e.g., graphically) channels of a subset of the plurality of wireless communication channels along a first axis, access point signal strength along a second axis, and channel utilization along a third axis; the channel interference interface may include one or more access point indicators positioned within the channel interference interface to indicate the primary channel and access point signal strength of a respective one or more access points; the channel interference interface may include one or more bandwidth indicators indicative of the frequency bandwidth utilized by the respective one or more access points; the channel interference interface may include one or more channel utilization indicators positioned within the channel interference interface to indicate a utilization of each channel of the subset; a relationship between the one or more access point indicators, one or more bandwidth indicators, and/or one or more channel utilization indicators is indicative of interference on a channel; the channel interference interface may enable, via the channel interference interface, an assessment (e.g., a visual assessment) of interference on the plurality of wireless communication channels (e.g., as experienced by an access point on a primary channel) based on the one or more channel utilization indicators, the one or more bandwidth indicators, or the one or more access point indicators.

In various examples, the wireless communication analyzer may be configured to improve a utilization of communication frequencies of the plurality of wireless communication channels by guiding an allocation of a primary channel or a frequency bandwidth to an access point. Such guidance may lead to allocation of a primary channel or a frequency bandwidth to an access point that avoids or reduces interference on one or more channels in the plurality of wireless communication channels.

In various examples, the wireless communication analyzer may be configured to identify two or more (i.e., at least two) access points in the plurality of access points that communicate on a same primary channel for wireless communication and determine whether the two or more access points have a signal strength within a threshold range of signal strengths of each other; based on a determination that the two or more access points have a signal strength within the threshold range of signal strengths of each other (or in cases, when the two or more access points have a signal strength within the threshold range of signal strengths of each other), the wireless communication analyzer may be configured to generate a merged access point indicator representing a combined bandwidth utilized by the two or more access points; the merged access point indicator includes an indication of a number of access points represented by the merged access point indicator; for at least one merged access point indicator, the wireless communication analyzer may be configured to generate a merged bandwidth indicator representing a combined bandwidth utilized by the two or more access points that spans from a lowest frequency utilized by any of the two or more access points to a highest frequency utilized by any of the two or more access points.

In various examples, the channel interference interface receives input (e.g., from a user) selecting a merged access point indicator; in response to receiving the input selecting a merged access point indicator, the wireless communication analyzer may be configured to launch a second channel interference interface; the second channel interference interface may include an indication of one or more channels along a first axis and an indication of access point signal strength along a second axis, an access point indicator for each respective access point represented by the merged access point indicator, the access point indicators indicating (e.g., graphically) the primary channel used by the respective access point for wireless communication and an access point signal strength of the respective access point; in connection with each access point indicator, the second channel interference interface may include a bandwidth indicator indicating a range of frequencies utilized by the respective access point; the channel scanner may be configured to tune to a respective channel of the plurality of channels for a period of time and receive one or more beacon data packets from at least one access point communicating via the respective channel; the one or more beacon data packets may be indicative of a frequency bandwidth utilized by at least one access point for wireless communication, a signal strength of at least one access point, other data regarding at least one access point, or a combination thereof; and/or the channel scanner may be further configured to update (e.g., periodically or on demand) the channel interference interface by rescanning the subset of channels in the channel interference interface.

In various examples, a method for assessment of wireless communication may include any combination of the following features: launching an interface for wireless assessment to indicate channels of a plurality of channels along a first axis, access point signal strength along a second axis, and channel utilization along a third axis; positioning one or more access point indicators within the interface relative to the first axis to indicate respective primary channels of one or more access points in a networking site; and enabling an assessment of wireless communication in the networking site based on the one or more access point indicators and the respective primary channels indicated in the interface; wherein the one or more access point indicators are further positioned within the interface relative to the second axis to indicate respective access point signal strengths of the one or more access points in the networking site; positioning one or more bandwidth indicators within the interface relative to the first axis to indicate respective bandwidth utilizations of the one or more access points, wherein enabling the assessment of wireless communication in the networking site is further based on the bandwidth utilizations indicated by the bandwidth indicators; positioning one or more channel utilization indicators within the interface relative to the third axis to indicate channel utilization of respective channels in the plurality of channels; and/or optimizing wireless communication on the plurality of channels by allocating an access point to a primary channel having less interference than one or more other channels of the plurality of channels based on the relative positioning of the one or more access point indicators, the one or more bandwidth indicators, or the one or more channel utilization indicators within the interface.

Methods according to the present disclosure may include any of the features described in the following paragraphs or in the above description, individually or in any combination.

In various examples, a method for assessment of wireless communication may include any combination of the following features: launching an interface for wireless assessment to indicate channels of a plurality of channels along a first axis, access point signal strength along a second axis, and channel utilization along a third axis; positioning one or more access point indicators within the interface relative to the first axis to indicate respective primary channels of one or more access points in a networking site; enabling an assessment of wireless communication in the networking site based on the one or more access point indicators and the respective primary channels indicated in the interface; wherein the one or more access point indicators are further positioned within the interface relative to the second axis to indicate respective access point signal strengths of the one or more access points in the networking site; further comprising positioning one or more bandwidth indicators within the interface relative to the first axis to indicate respective bandwidth utilizations of the one or more access points; wherein enabling the assessment of wireless communication in the networking site is further based on the bandwidth utilizations indicated by the bandwidth indicators; further comprising positioning one or more channel utilization indicators within the interface relative to the third axis to indicate channel utilization of respective channels in the plurality of channels; and/or further comprising optimizing wireless communication on the plurality of channels by allocating an access point to a primary channel having less interference than one or more other channels of the plurality of channels based on the relative positioning of the one or more access point indicators, the one or more bandwidth indicators, or the one or more channel utilization indicators within the interface.

In various examples, a method may include any combination of the following features: launching a channel interference interface that indicates a plurality of channels along a first axis, access point signal strength along a second axis, and channel utilization along a third axis; the channel interference interface may include one or more access point indicators, one or more bandwidth indicators, and one or more channel utilization indicators; the one or more access point indicators, the one or more bandwidth indicators, and the one or more channel utilization indicators collectively are indicative of interference on the channels; further including populating the channel interference interface based on sensed data associated with the plurality of channels and a plurality of access points, each access point using a primary channel of a plurality of channels and having a frequency bandwidth for wireless communication, the one or more access point indicators, one or more bandwidth indicators, and one or more channel utilization indicators being generated based on the sensed data; further including enabling, via the channel interference interface, an assessment (e.g., a visual assessment) of interference on the plurality of channels, for example as experienced by an access point on a primary channel, based on the one or more channel utilization indicators, the one or more bandwidth indicators, and the one or more access point indicators; optimizing wireless communication on the plurality of channels by allocating (i.e., deploying or assigning) an access point to a primary channel having less interference than other channels of the plurality of channels.

The various examples and embodiments described above can be combined to provide further embodiments of the disclosure. These and other changes can be made to the embodiments in light of the above-detailed description. In general, in the following claims, the terms used should not be construed to limit the claims to the specific embodiments disclosed in the specification and the claims, but should be construed to include all possible embodiments along with the full scope of equivalents to which such claims are entitled.

## Claims

1. A system comprising:
at least one processor; and
at least one memory having computer-executable instructions stored thereon that, when executed by the at least one processor, cause the system to:
launch a channel interference interface that indicates channels of a plurality of channels along a first axis, access point signal strength along a second axis, and channel utilization along a third axis, and based on sensed data associated with the plurality of channels and a plurality of access points, populate the channel interference interface by positioning within the channel interference interface one or more access point indicators, one or more bandwidth indicators, and one or more channel utilization indicators, relative to the first, second, and third axes, wherein each access point uses a primary channel of the plurality of channels as indicated by a corresponding access point indicator and has a frequency bandwidth for wireless communication, and
enable an assessment of interference on the plurality of channels based on the one or more access point indicators, the one or more bandwidth indicators, or the one or more channel utilization indicators, or a relationship between two or more access points indicators, bandwidth indicators, or channel utilization indicators, wherein the relationship between the two or more access points indicators, bandwidth indicators, or channel utilization indicators, is indicative of interference on the channels.

2. The system of claim 1, wherein the computer-executable instructions further cause the system to mitigate interference on a channel by guiding an assignment or reassignment of an access point to a different channel among the plurality of channels based on the assessment of interference.

3. The system of claim 1 or claim 2, wherein when populated the channel interference interface includes:
the one or more channel utilization indicators, each channel utilization indicator being aligned with a respective channel along the first axis and positioned with respect to the third axis to indicate a channel utilization of the respective channel;
the one or more access point indicators, each access point indicator representing a respective access point in the plurality of access points, wherein each access point indicator is aligned along the first axis with the primary channel of the respective access point and positioned with respect to the second axis to indicate the access point signal strength of the respective access point; and
the one or more bandwidth indicators, each bandwidth indicator representing the frequency bandwidth of a respective access point in the plurality of access points.

4. The system of any one of claims 1 to 3, wherein the channel interference interface includes:
a merged access point indicator generated based on a set of access points having a signal strength within a threshold range of signal strength of each other; and
a merged bandwidth indicator generated based on a combined frequency bandwidth of the set of access points,
wherein input received by the at least one processor indicating a user selection of the merged access point indicator causes the system to launch a second channel interference interface,
and optionally wherein the second channel interference interface includes:
an indication of one or more channels and an indication of access point signal strength,
an access point indicator for each respective access point represented by the merged access point indicator, wherein each access point indicator indicates the primary channel used by the respective access point and the access point signal strength of the respective access point, and
a bandwidth indicator for each respective access point represented by the merged access point indicator, wherein the bandwidth indicator indicates the frequency bandwidth of the respective access point, each bandwidth indicator comprising a line segment spanning from a lowest frequency utilized by the respective access point to a highest frequency utilized by the respective access point.

5. The system of any one of claims 1 to 4, further comprising a channel scanner configured to scan the plurality of channels to identify the plurality of access points and determine the frequency bandwidth utilized by each access point,
wherein for each respective channel of the plurality of channels, the channel scanner is configured to tune to the respective channel for a period of time and receive one or more beacon data packets from at least one access point communicating via the respective channel,
and optionally wherein the one or more beacon data packets are indicative of the frequency bandwidth utilized by the at least one access point for wireless communication, or wherein the one or more beacon data packets are indicative of a signal strength of the at least one access point.

6. The system of any one of claims 1 to 5, wherein, when displayed, the channel interference interface is limited to a subset of channels of the plurality of channels, the channel interference interface further comprising a user-operable scrolling interface configured to scroll among the plurality of channels along the first axis to select a different subset of channels of the plurality of channels.

7. The system of claim 6, wherein the channel interference interface includes a portion of a bandwidth indicator of an access point or group of access points on a primary channel not included in the subset of channels, the portion of the bandwidth indicator graphically indicating a range of frequencies utilized by the access point or group of access points that overlaps with a frequency of one or more channels in the subset of channels,
or wherein the system further comprises a channel scanner configured to scan the plurality of channels to identify the plurality of access points and determine the frequency bandwidth utilized by each access point,
wherein the channel scanner is further configured to update the channel interference interface by rescanning only the subset of channels.

8. A system comprising:
a channel scanner configured to scan a plurality of wireless communication channels for utilization of communication frequencies by a plurality of access points, the channel scanner being further configured to generate sensed data indicating the plurality of wireless communication channels and the plurality of access points, each access point having a primary channel and a frequency bandwidth for wireless communication; and
a wireless communication analyzer configured to:
launch a channel interference interface that indicates channels of a subset of the plurality of wireless communication channels along a first axis, access point signal strength along a second axis, and channel utilization along a third axis, the channel interference interface including one or more access point indicators positioned within the channel interference interface to indicate the primary channel and access point signal strength of a respective one or more access points, one or more bandwidth indicators indicative of the frequency bandwidth utilized by the respective one or more access points, and one or more channel utilization indicators positioned within the channel interference interface to indicate a utilization of each channel of the subset; and
enable an assessment of interference on the plurality of wireless communication channels based on the one or more channel utilization indicators, the one or more bandwidth indicators, or the one or more access point indicators in the channel interference interface.

9. The system of claim 8, wherein the wireless communication analyzer is further configured to improve a utilization of communication frequencies of the plurality of wireless communication channels by guiding an allocation of a primary channel or a frequency bandwidth to an access point that avoids or reduces interference on one or more channels in the plurality of wireless communication channels.

10. The system of claim 8 or claim 9, wherein the wireless communication analyzer is further configured to:
identify two or more access points in the plurality of access points that communicate on a same primary channel in the plurality of wireless communication channels;
determine whether the two or more access points have a signal strength within a threshold range of signal strengths of each other; and
when the two or more access points have a signal strength within the threshold range of signal strengths of each other:
generate a merged bandwidth indicator representing a combined bandwidth utilized by the two or more access points, wherein the merged bandwidth indicator spans from a lowest frequency utilized by any of the two or more access points to a highest frequency utilized by any of the two or more access points; and
generate a merged access point indicator representative of the two or more access points, wherein the merged access point indicator includes an indication of a number of access points represented by the merged access point indicator.

11. The system of claim 10, wherein the channel interference interface is further configured to receive user input for selecting a merged access point indicator and in response thereto, the wireless communication analyzer is configured to launch a second channel interference interface, wherein the second channel interference interface includes:
an indication of one or more channels along a first axis and an indication of access point signal strength,
an access point indicator for each respective access point represented by the merged access point indicator, wherein each access point indicator indicates the primary channel used by the respective access point and the access point signal strength of the respective access point, and
in connection with each access point indicator, the second channel interference interface further includes a bandwidth indicator indicating a range of frequencies utilized by the respective access point.

12. The system of any one of claims 8 to 11, wherein for each respective channel of the plurality of wireless communication channels, the channel scanner is configured to:
tune to the respective channel for a period of time; and
receive one or more beacon data packets from at least one access point communicating via the respective channel, wherein the one or more beacon data packets are indicative of the signal strength of the at least access point;
or wherein the channel scanner is further configured to update the channel interference interface by rescanning the subset of wireless communication channels in the channel interference interface.

13. A method for assessment of wireless communication, comprising:
launching an interface for wireless assessment to indicate channels of a plurality of channels along a first axis, access point signal strength along a second axis, and channel utilization along a third axis;
positioning one or more access point indicators within the interface relative to the first axis to indicate respective primary channels of one or more access points in a networking site; and
enabling an assessment of wireless communication in the networking site based on the one or more access point indicators and the respective primary channels indicated in the interface.

14. The method for assessment of wireless communication according to claim 13, wherein the one or more access point indicators are further positioned within the interface relative to the second axis to indicate respective access point signal strengths of the one or more access points in the networking site;
the method further comprising positioning one or more bandwidth indicators within the interface relative to the first axis to indicate respective bandwidth utilizations of the one or more access points,
wherein enabling the assessment of wireless communication in the networking site is further based on the bandwidth utilizations indicated by the bandwidth indicators.

15. The method for assessment of wireless communication according to claim 14, further comprising positioning one or more channel utilization indicators within the interface relative to the third axis to indicate channel utilization of respective channels in the plurality of channels,
and optionally further comprising optimizing wireless communication on the plurality of channels by allocating an access point to a primary channel having less interference than one or more other channels of the plurality of channels based on the relative positioning of the one or more access point indicators, the one or more bandwidth indicators, or the one or more channel utilization indicators within the interface.
